# EUROPEAN PATENT SPECIFICATION

(11) **EP 0 712 377 B1**
(45) Date of publication and mention of the grant of the patent: **20.01.1999**
(21) Application number: 94916699.5
(22) Date of filing: 09.05.1994
(51) Int. Cl.: B01D 53/56

(54) **PROCESS AND APPARATUS FOR ENHANCING DISTRIBUTION OF NOx-REDUCING CHEMICALS IN A HIGH-SOLIDS ENVIRONMENT**
VERFAHREN UND VORRICHTUNG ZUR VERBESSERUNG DER VERTEILUNG VON NOx-REDUZIERENDEN CHEMIKALIEN IN EINEM MEDIUM MIT HOHEM FESTSTOFFGEHALT
PROCEDE ET APPAREIL POUR AMELIORER LA REPARTITION DE PRODUITS CHIMIQUES REDUISANT LE NOx DANS UN ENVIRONNEMENT A HAUTE TENEUR EN MATIERES SOLIDES

(30) Priority: 07.05.1993 US 58949
(43) Date of publication of application: 22.05.1996
(73) Proprietor: NALCO FUEL TECH, Naperville, IL 60563 (US)
(72) Inventor: COMPARATO, Joseph, R., Naperville, IL 60564 (US); SUN, William, H., Naperville, IL 60563 (US); MICHELS, William, F., Aurora, IL 60564 (US)
(74) Representative: VOSSIUS & PARTNER
(86) International application number: US9405117
(87) International publication number: WO9426659

(56) References cited:
- WO-A-89/12601
- WO-A-91/06506
- WO-A-91/17814
- US-A- 3 900 554
- US-A- 4 208 386
- US-A- 4 325 924
- US-A- 4 719 092
- US-A- 4 777 024
- US-A- 4 780 289
- US-A- 4 844 878
- US-A- 4 877 591
- US-A- 4 985 218
- US-A- 4 992 249
- US-A- 4 997 631
- US-A- 5 045 292

## Description

The invention relates to reducing the environmental damage caused by large-scale combustion, and provides improved processes and apparatus for achieving this, especially in the field of NOₓ reduction by selective noncatalytic reduction (SNCR) in effluents where influences such as high solids contents create large temperature gradients transverse to the direction of flow.

The oxides of nitrogen (NOₓ) contribute to smog, ground level ozone formation, and acid rain. The major sources of anthropogenic NOₓ emissions are stationary and mobile combustion of carbonaceous materials, such as coal, oil and gas, as well as refuse and organic industrial chemicals. These materials are burned at such high temperatures (*e.g*., 1000° to 1700°C) in large scale combustors, that the conditions favor formation of free radicals of oxygen and nitrogen and their chemical combination as nitrogen oxides. Titles 1, 3, and 4 of the Clean Air Act Amendments of 1990 address the control of NOₓ emissions from stationary sources to limit ground level ozone and acid rain.

To reduce the emission of NOₓ, both primary and secondary measures have been employed. Primary measures are those which modify combustion itself and may involve using an excess of air or fuel or a combination of both in staged combustion. However, such measures are typically expensive and present only partial remedies.

A number of economically-attractive secondary measures have been developed which enable combustion under efficient conditions, with resultant NOₓ generation, but then reduce the NOₓ by converting it to other compounds which can either be emitted or eliminated from the flue gas. Of these, selective gas phase reactions -- both catalytic (SCR) and non-catalytic (SNCR) -- are advantageous because they permit NOₓ reduction while using relatively low levels of chemical reducing agents. The SNCR procedures are especially effective and economical for many applications, especially those where particulates could cause fouling of catalysts.

However, the attainment of consistent, high reductions in NOₓ with SNCR procedures is a matter of considerable engineering and chemistry, especially where large temperature gradients occur across a plane where chemical injection is desired, such as in effluents containing high levels of entrained solids. These SNCR reactions occur in the gas phase and typically involve NOₓ levels of 20 to 1500 parts per million by volume (ppmᵥ) and either urea or ammonia at from one to three times the amount stoichiometrically required. The reactions require mating of the reactive materials in high dilution in the gas phase at the correct temperature.

Typically, the NOₓ-reducing agents are introduced in aqueous droplets. For best results, the water must be evaporated from the droplets and the active agent converted to the gas phase to achieve contact with the NOₓ molecules in the temperature range effective for reaction, *e.g*., from 850° to 1150°C. In the cases of coal-fired furnaces and those which require the injection of solid adsorbents to control the emission of sulfur oxides (SOₓ), it has now been determined that the high levels of solids that become entrained in the effluent gases can create such extreme cross-sectional temperature gradients that SNCR procedures which attempt chemical injection across the entire cross section of an effluent passage, are rendered inefficient and productive of secondary pollutants. Unfortunately, space limitations and combustor geometry often greatly limit injector location to just such circumstances.

High levels of entrained solids affect the dynamics of evaporation of the water from treatment droplets and release of the active chemicals. Results have often been inconsistent when conventional means have been used in high solids environments, even where the desired temperature conditions were apparently being met. Temperature gradients of from 100° to 350°C, and greater, can be created by the tendency of the solids to attenuate or refract the transmission of radiation from the gas to the heat absorbing surfaces. This can make some areas of a cross section too cold and others too hot. If too cold, the droplets can impact the equipment surfaces and/or form undesirable by-products such as ammonia, and, if too hot, the active chemical can be oxidized to form further NOₓ.

There is a need for improved distribution of active SNCR chemicals in combustion effluents which exhibit large cross-sectional temperature gradients, such as those heavily loaded with entrained particulates.

Prominent among the SNCR processes are those disclosed by Lyon in U.S. Patent 3,900,554 and by Arand *et al* in U.S. Patents 4,208,386 and 4,325,924. Briefly, these patents disclose that ammonia (Lyon) and urea (Arand *et al*) can be injected into hot combustion gases to selectively react with NOₓ and reduce it to diatomic nitrogen and water.

The SNCR process described by Lyon reduces the concentration of nitrogen monoxide (NO). Lyon discloses injecting ammonia or certain ammonia precursors, or aqueous solutions of either, into an oxygen-rich waste gas for selective reaction with the nitrogen monoxide at a temperature in the range of from 870° to 1100°C. While the lower temperature limit can be reduced by the addition of certain substances, it is important that the temperature of the combustion effluent lie within a narrow "temperature window" during the contact with the gaseous ammonia to achieve maximum utilization of the ammonia for reduction of NO. Inefficient utilization increases costs and causes other problems associated with ammonia discharge, such as reaction with the sulfur to form solid ammonium sulfate and/or bisulfite which deposit on heat exchange surfaces and can quickly reduce heat transfer efficiency.

Arand *et al* disclose in U.S. Patent 4,208,386 that urea can be added alone or in solution to oxygen-rich effluents in a temperature range from 700° to 1100°C. Similarly, in U.S. Patent 4,325,924, Arand *et al* describe an SNCR process utilizing urea in fuel-rich combustion effluents. Any urea which fails to react with NOₓ within the defined temperature windows is, nonetheless chemically transformed by heat and some, during cooling, results in ammonia formation.

A number of other patents define methods for operating at temperatures outside of the narrow ranges defined above for SNCR. For example, in U.S. Patent 4,992,249, Bowers discloses that if droplet size is increased and urea concentration is decreased, good results can be achieved in oxygen-rich effluents at higher temperatures than disclosed by Arand *et al*. And, in U.S. Patent 4,719,092, Bowers discloses that an additional material, an oxygen-containing hydrocarbon, can be introduced with the urea solution to reduce residual ammonia concentration in the effluent. Despite the ability of these processes to move the temperature window either higher or lower, the opening in the window remains fairly constant and distribution of the active chemicals at the operative temperature remains important. These patents do not recognize the difficulties in achieving suitable distribution where the temperature gradients across the plane of intended chemical introduction are too great.

Various nozzles and injectors have been designed to provide better distribution of chemicals into injection passages; however, without an understanding of the present invention, the achievement of satisfactory chemical distribution will remain an extremely difficult task. The recognition that operational factors such as entrained solids cause a predictable departure from conventionally understood temperature distributions, is essential to effective control of SNCR processes.

It is an object of the invention to improve the introduction and utilization of pollutant-reducing chemicals in particulate-laden combustion effluents effluents which are characterized by large temperature gradients in the direction transverse to flow.

It is another object of the invention to improve the reliability of SNCR NOₓ-reducing installations which depend on the introduction of aqueous solutions of NOₓ-reducing agents into combustion effluents which contain large amounts of entrained solids.

It is another object to mitigate utilization and distribution problems associated with SNCR processes in coal-fired installations.

A yet further, but related, object is to mitigate utilization and distribution problems associated with SNCR processes in installations employing sorbent injection for SOₓ reduction.

These and other objects are achieved by the present invention which provides
a process for reducing the concentration of nitrogen oxides in a flowing stream of combustion effluent laden with entrained particulate solids at a level of at least 5 g/m³ which cause large temperature gradients transverse to the direction of effluent flow, comprising:
determining the temperature at a plurality of points on a plane transverse to the flow of combustion effluent;
based on the determined temperatures, defining a near-wall zone which has an average temperature effective for NOₓ reduction by selective noncatalytic reduction utilizing a suitable NOₓ-reducing composition, and a central zone which has an average temperature higher than suitable for NOₓ reduction with that composition, the average temperature in the near-wall zone being at least 200°C lower than the average temperature in the central zone; and
introducing NOₓ-reducing composition into the effluent within the near-wall zone as fine droplets of an aqueous solution, the droplets being of a size of from 5 to 100 µm Sauter mean diameter and of concentration effective to assure evaporation of substantially all of the water within the near-wall zone.

In one preferred embodiment, NOₓ-reducing composition is also introduced as medium-to-large diameter aqueous droplets with a size, momentum and concentration to pass into and through the central zone without significantly reacting until the temperature of the effluent in that zone is reduced to a level effective for NOₓ reduction. The concentration of the water and active NOₓ-reduction composition in the droplets which enter the central zone at high temperature, are selected for the droplet size range and injection velocity so that the water protects the active composition during high-temperature residence. The water should be sufficiently evaporated upon entering the lower temperatures downstream to quickly release the active NOₓ-reducing composition within the effective temperature range. Introduction of small as well as large droplets can be achieved with a single or a multiplicity of injectors, as desired.

It is also preferred that the above process be employed as the first stage of a multi-stage process. Desirably, a second stage injection of the same or a different composition can be utilized to further reduce NOₓ or other pollutant.

Third and subsequent stages can be employed as desired.

In another embodiment, an excess of NOₓ-reducing composition can be effectively employed in the near-wall zone to maximize NOₓ-reduction and produce ammonia slip. This is effective where ammonia by-product is mixed by convective currents with at least a portion of the central zone effluent after it has been cooled to an effective temperature for reaction.

The invention will be better understood and its advantages will become more apparent when the following detailed description is read in conjunction with the accompanying drawings, in which:
Figure 1 is a vertical cross section of a large scale combustor showing isotherms at a representative load condition and one arrangement of injectors for introducing active chemicals for reducing NOₓ in accordance with the invention; and
Figure 2 is a three-dimensional view showing isotherms in a large scale combustor as surfaces and showing multiple level injection, with injectors at each level positioned at several locations around the combustor perimeter as would be necessary to provide good coverage of active chemical.

Effluents in need of treatment are produced by a variety of sources including large industrial and utility boilers, incinerators, circulating fluidized bed boilers, and the like. Some of these, like coal- and wood-fired boilers will naturally produce effluents with high solids loadings. Others, such as those burning oil with significant sulfur content, produce effluents with high SOₓ contents which are treated by dry or wet injection of sorbents such as calcium carbonate, calcium bicarbonate, lime, or the like. It will be understood, however, that the invention is applicable in any high temperature environment where high temperature gradients, such as caused by the presence of entrained solids, interfere with the reduction of nitrogen oxides by selective gas-phase reaction.

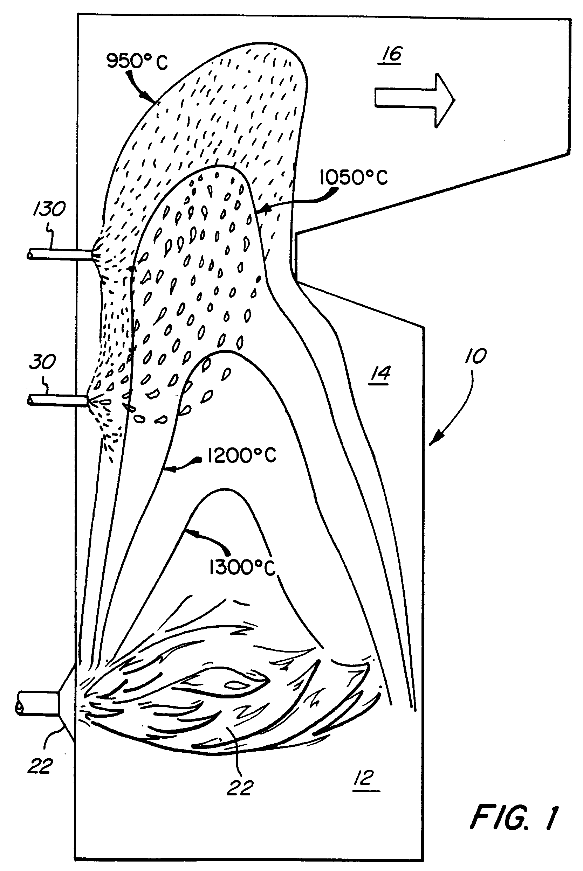

Figure 1 depicts a vertical cross-section of a large-scale combustor 10 and shows isotherms determined within the effluent at a representative load condition. Burner 20 is shown to create a combustion flame 22 by burning a fuel such as coal with combustion air near the bottom of the combustion chamber 12. Hot combustion gases form an effluent which moves upwardly from the flame. For the purpose of definition, the term "effluent passage" is meant to include the entire structure through which the hot combustion gases flow, including the combustion chamber 12, vertical passage 14, horizontal passage 16, and subsequent structure (not shown).

As the effluent rises, zones of differential temperature develop due to a number of influences -- significant among which are the effect of heat exchange through effluent passage walls and particulate solids entrained within the hot gases. The entrained solids near the heat absorbing walls tend to radiate heat efficiently over short path lengths. Thermal radiation from the central portions of the gas is refracted or otherwise attenuated by the entrained solids. Figure 1 shows representative isotherms, *e.g*. at 1300°C, 1200°C, 1050°C and 950°C, illustrating temperature gradients greater than 200° to 350°C and more at some horizontal cross sections where the measurable temperatures-near the walls would be apparently ideal for SNCR, typically from 950° to 1050°C. Temperature gradients of these magnitudes make ineffective those SNCR procedures which attempt injection of uniformly-sized droplets to achieve uniform coverage across a plane transverse to the direction of flow.

It is typical in the case of effluents with high solids loadings (*e.g*., greater than 5 grams/normal cubic meter) that the difference between the average flue gas temperatures near the wall and near the center of the unit is at least 200°C, and can be 350°C or more higher. At least a portion of the NOₓ-reducing composition is preferably introduced into the near-wall zone at this location as fine droplets of an aqueous solution, to assure evaporation of substantially all of the aqueous carrier from these droplets within the near-wall zone. In most cases, a least some of the droplets should be larger and be injected at sufficient velocity to enter the central zone and survive until they pass through it.

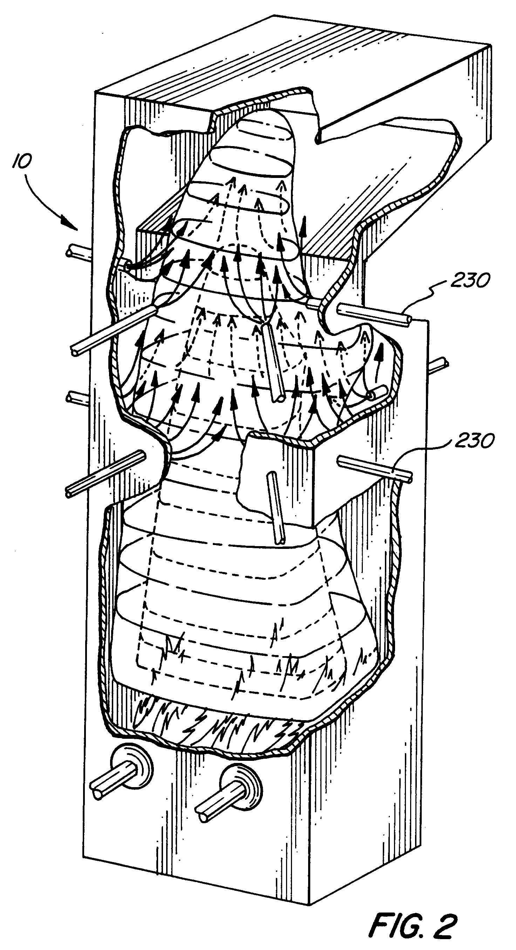

The present invention calls for determining the temperature of the effluent at a sufficient number of locations that a temperature profile can be determined to define a near-wall zone where the temperature conditions favor SNCR reactions, and a central zone where the temperature is too high. This can be accomplished by means of a suction pyrometer employing a k-type thermocouple. It is also desired to determine effluent velocities at a sufficient number of locations to permit the use of a suitable computational fluid dynamics (CFD) modeling technique to establish a three-dimensional temperature profile, such as illustrated in Figure 2, to determine the best location within the nearwall zone for introducing the NOₓ-reducing composition. For applications with construction in the future or where direct measurements are impractical, CFD modeling alone can sufficiently predict furnace conditions.

The injection locations into the near-wall zone, and the droplet velocity, size and concentration, are facilitated by computational fluid dynamics and chemical kinetic modeling (CKM) techniques. In reference to the CFD and CKM techniques, see the following publication and the references cited therein: Sun, Michels, Stamatakis, Comparato, and Hofmann, "Selective Non-Catalytic NOₓ Control with Urea: Theory and Practice, Progress Update", *American Flame Research Committee, 1992 Fall International Symposium, October 19-21, 1992, Cambridge, MA.*

Figure 1 shows one arrangement of injectors for introducing active chemicals for reducing NOₓ in accordance with the invention. Two levels of injection are shown, but the invention can be carried out with a single zone where conditions permit. Typically, however, it is preferred to employ multiple stages. This permits both the injection of different compositions simultaneously or the introduction of compositions at different locations or with different injectors to follow the temperature variations which follow changes in load. See in this regard, U.S. Patent 4,777,024 to Epperly *et al*. The location of injection and chemical formulation can be varied to meet the temperature and compositional variations in the gas stream being treated as described in U.S. Patent 4,780,289 to Epperly *et al*. Desirably, a second stage injection of the same or a different composition is employed to further reduce NOₓ or other pollutant. Third and subsequent stages can be employed as desired.

In Figure 1, a first level of introduction 30 is illustrated as providing sprays having a droplet size distribution which includes smaller droplets for shallow penetration into the near-wall zone and larger droplets with deeper penetration into the central zone. For practical purposes with urea solutions, the near-wall zone is preferably from about 950° to 1050° C, and the central zone will include the higher temperatures, at this level. The other level of introduction illustrated as 130, is farther downstream and is shown as providing a spray which again penetrates only the near-wall zone at that location. The exact location of the sprays and their spray patterns can be determined for optimum results by computational fluid dynamics techniques -- given an appreciation of the distinct temperature zones which occur, such as in high solids environments and an understanding that the different horizontal cross-sectional temperature zones must be treated separately.

In most SNCR processes, the treatment composition is introduced into the effluent by an injector which generally comprises a conduit, sometimes fitted at the tip with a nozzle, extending into an effluent gas stream. In some cases a portion of effluent or other gas is employed to help atomize and disperse the treatment composition. The spray or injection pattern is defined with precision, often measured with the aid of computerized data acquisition to assure good distribution and reaction. Apparatus of varying degrees of sophistication are known. Some comprise coaxial, multi-tubular structures, such as those disclosed by Burton in U.S. Patent 4,842,834, by DeVita in U.S. Patent 4,985,218, and by Chawla *et al* in WO 91/17814 Injectors of these and other designs can be used to achieve the desired injection pattern, droplet sizes, droplet concentrations and droplet velocities to achieve the objectives of the invention.

Typically, in SNCR processes an attempt is made to penetrate the effluent stream with complete coverage in a plane transverse to the direction of effluent flow. The present invention helps improve operation by defining a near-wall zone having suitable temperatures for SNCR and introducing active chemicals into that zone, despite the fact that hotter than desired temperatures exist on that same plane. The improvement is facilitated by introducing fine droplets to be utilized in the near-wall zone and large droplets which enter the central zone but survive until they reach a lower temperature zone downstream.

Referring again to Figure 2, a plurality of injectors 230 will typically be employed around the perimeter of the combustor. The injectors are preferably spaced one from the other as uniformly as is consistent with effectiveness which will vary with velocity and temperature profiles within the effluent passage. Typically, to achieve uniform coverage with fine droplets in the near-wall zone, nozzles will be spaced from about 1 to about 3 meters apart. While not shown, for clarity, it is also desired to inject larger droplets at at least the first stage. Introduction of small as well as large droplets can be achieved with a single or a multiplicity of injectors, as desired.

The coverage of the central zone, which is hotter than the near-wall zone, is accomplished by injecting the NOₓ-reducing composition farther downstream (where the effluent has cooled) or by injecting larger droplets at relatively low concentration and high velocity so that they survive the higher temperatures and release the active agent farther downstream where the temperature is more suitable for SNCR. When operated optimally, chemical utilization is increased, undesired by-products are decreased, and the chances for impingement with and damaging of heat exchange and other equipment surfaces is greatly reduced.

Droplet sizes indicated below are determined with a Malvern 2600 instrument, utilizing a Fraunhofer diffraction, laser-based system. And, unless otherwise indicated, all parts and percentages are based on the weight of the composition at the particular point of reference.

It is preferred that at least a portion (*e.g*., at least 10%) of the NOₓ-reducing composition be introduced into the near-wall zone in a form to have its intended effect therein. It is dispersed from a nozzle to provide uniformly fine droplets having an average droplet size within the range of from 5 to 100 µm Sauter mean diameter. The concentration of the active chemical and water in the fine droplets should permit complete release within this zone. Thus, relatively high concentrations of NOₓ-reducing chemical, *e.g*. 20 to 50%, are preferred for this purpose. Droplet injection velocities are not particularly important if sizes are small enough, but can reasonably be in the range of from 5 to 60 m/sec.

It is also preferred that a portion of the NOₓ-reducing composition which is introduced into the near-wall zone of suitable reaction temperature, be injected so as to pass through the near-wall zone and into the central zone. Because the central zone is too hot for good SNCR reaction, the droplets should be of a size, concentration and velocity effective to pass through the portion of the zone which is too hot, survive until lower temperatures prevail downstream and there release the active chemical. The concentration of the water and active NOₓ-reducing composition in the droplets which enter the central zone at high temperature are selected so that the water protects the active composition during high-temperature residence. The water should be sufficiently evaporated upon entering the lower temperatures downstream to quickly release the active NOₓ-reducing composition within the effective temperature range. For these purposes, the droplets will preferably be greater than 100 to 1000, *e.g*. greater than 100 to 500 µm Sauter mean diameter, a concentration of from 2 to 35% active NOₓ-reducing agent, ideally of low volatility such as urea, and a velocity of from about 10 to 60 m/sec.

It is an advantage of the present invention that liquid droplets comprising NOₓ-reducing agents can be injected at well-controlled particle size distributions and velocities to make at least a portion of the active agent available near the point of injection in the near-wall zone while yet providing, as desired, droplets which will enter the central zone and survive desired temperature window for NOₓ reduction. This distribution of droplets can be accomplished using one or more injectors. Well-controlled polydispersity of droplet sizes will provide optimum results following the teachings of the invention.

The NOₓ-reducing agent is most desirably introduced as an aqueous treatment solution, such as urea or other NH-containing compositions, and can include one or more enhancers. The various treatment solutions are premixed to include the NOₓ-reducing composition and enhancer most appropriate for the range of temperatures expected to be encountered.

The total amount of the reducing agent injected into the effluent from all points should be sufficient to obtain a reduction of the nitrogen oxide concentration. In particular, the reducing agents are employed in total amounts sufficient to provide a molar ratio of reducing agent to baseline nitrogen oxide content (*i.e*., prior to treatment at that stage) of about 1:4 to about 5:1. The ratio is preferably within the range from 1:2 to 3:1, even more narrowly 2:3 to 2:1. In most situations this amount will be distributed jointly by a number of nozzles from a number of points as illustrated in Figure 1.

In one embodiment, an excess of NOₓ-reducing composition can be effectively employed in the near-wall zone to maximise NOₓ reduction and produce ammonia slip. This is effective where ammonia by-product is mixed by convective currents with at least a portion of the central zone effluent after it has been cooled to an effective temperature for reaction. Various NH-containing compositions, in their pure and typical commercial forms, will generate effective gas-phase agents (*e.g*., the amidogen radical) for SNCR when introduced in aqueous solution and subjected to elevated temperatures. Among the prominent NH-containing compositions are those selected from the group consisting of ammonia, urea, urea precursors, urea hydrolysis products, products of reaction of urea with itself or other compositions, related compositions, and mixtures of these. Among these compounds are ammonium carbonate, ammonium formate, ammonium citrate, ammonium acetate, ammonium oxalate, other ammonium salts (inorganic and organic) particularly of organic acids, ammonium hydroxide, various stable amines, guanidine, guanidine carbonate, biguanide, guanylurea sulfate, melamine, dicyanimide, calcium cyanamide, biuret, 1,1-azobisformamide, methylol urea, methylol urea-urea, dimethyl urea, hexamethylenetetramine (HMTA), and mixtures of these.

Among the hydrolysis products are ammonia, carbamates such as ammonium carbamate, ammonium carbonate, ammonium bicarbonate and other ammonia salts, various urea complexes and half ammonia salts. The exact form of some of these compounds is not known because the techniques employed to analyze them can affect their makeup. U.S. Patent 4,997,631 to Hofmann *et al* and PCT application WO 92/02291 to von Harpe *et al*, are incorporated herein by reference.

Enhancers are additive materials which modify the effectiveness of a pollutant-reducing agent in terms of its effective temperature window, its utilization efficiency, or the like. Among the enhancers are the above materials when used in suitable combination, oxygenated hydrocarbons, and mixtures of these. Exemplary of the oxygenated hydrocarbons are ketones, aldehydes, alcohols including polyols, carboxylic acids, sugars, starch hydrolysates, hydrogenated starch hydrolysates, sugar-containing residues such as molasses, and mixtures of any of these.

It is an option to incorporate in the solutions of the invention, a hardness-suppressing composition comprising at least one member selected from the group consisting of polymers, phosphonates, chelants, phosphates and mixtures of any two or more of these, in an amount effective to suppress hardness. Thus, single members of this group can be employed where effective, or two or more members of a single group can be employed, as well as mixtures of members from different groups. Surfactants and stabilizers are also employed.

Control of liquid droplet sizes can be facilitated by chemical as well as mechanical means. For example, the addition of surfactants can help provide smaller average droplet sizes as disclosed in U.S. Patent 5,489,419 by D. Diep and L. Lin. Also, the addition of certain polymers can help provide larger droplet sizes as disclosed in U.S. patent 5,536,482 by D. Diep, L. Lin and P. Christiansen. The various injectors and nozzles can be tested at various flow rates and pressures to determine their effect on droplet sizes.

The NOₓ-reducing compositions will typically be prepared and shipped as a concentrate which is diluted for use. Typically, these concentrates will contain 25 to 65% urea, and 0.05 to 1.0 % of an effective hardness-suppressing composition. The urea and a separate additive package can be preblended to form this concentrate. This concentrate is typically diluted prior to injection as required to achieve a urea concentration effective under the injection conditions. Typically, dilution to concentrations of from 1 to 35% urea are effective. Typically, the pH of the aqueous solution is above 5, and generally is within the range of from 7 to 11, *e.g*., 8 to 10.

The above description is for the purpose of teaching the person of ordinary skill in the art how to practice the invention. It is not intended to detail all of those obvious modifications and variations which will become apparent to the skilled worker upon reading the description. It is intended, however, that all such obvious modifications and variations be included within the scope of the invention which is defined by the following claims.

## Claims

1. A process for reducing the concentration of nitrogen oxides in a flowing stream of combustion effluent laden with entrained particulate solids at a level of at least 5 g/m³ which cause large temperature gradients transverse to the direction of effluent flow, comprising:
determining the temperature at a plurality of points on a plane transverse to the flow of combustion effluent;
based on the determined temperatures, defining a near-wall zone which has an average temperature effective for NOₓ reduction by selective noncatalytic reduction utilizing a suitable NOₓ-reducing composition, and a central zone which has an average temperature higher than suitable for NOₓ reduction with that composition, the average temperature in the near-wall zone being at least 200°C lower than the average temperature in the central zone; and
introducing NOₓ-reducing composition into the effluent within the near-wall zone as fine droplets of an aqueous solution, the droplets being of a size of from 5 to 100 µm Sauter mean diameter and of concentration effective to assure evaporation of substantially all of the water within the near-wall zone.

2. A process according to claim 1 wherein the average temperature in the near-wall zone is at least 350°C lower than the average temperature in the central zone.

3. A process according to claim 2 wherein the effluent is from a coal-fired or other solid fuel-fired combustor.

4. A process according to claim 2 wherein the effluent includes entrained solid sorbents introduced for SOₓ reduction.

5. A process according to claim 2 wherein a portion of the NOₓ-reducing composition is introduced as aqueous droplets larger than said fine droplets with a size greater than 100 µm Sauter mean diameter, and momentum and concentration effective to cause the droplets to pass into and through the central zone without significantly reacting until the temperature of the effluent in that zone is reduced to a range effective for NOₓ reduction.

6. A process according to claim 5 wherein the introduction of fine and the larger droplets is accomplished by the same injector.

7. A process according to claim 5 wherein a multiplicity of injectors is employed to introduce the fine and the larger droplets.

8. A process according to claim 1 wherein NOₓ-reducing composition comprises an NH-containing composition.

9. A process according to claim 8 wherein the NOₓ-reducing composition comprises an aqueous solution of a member selected from the group consisting of ammonia, urea, urea precursors, urea hydrolysis products, carbamates, ammonium carbonate, ammonium bicarbonate, cyanurates, ammonium salts of organic acids, other amidozine-generating compositions and mixtures of these.

10. A process according to claim 9 wherein the NOₓ-reducing agent comprises urea or at least one of its hydrolysis products or a salt thereof.

11. A process according to any of claims 1 to 5, wherein the central zone has an average temperature at least 300°C higher than that of the near-wall zone; and wherein a NOₓ-reducing composition as defined in claim 9 is introduced into the effluent, a portion being injected into the near-wall zone as fine droplets,

12. A process according to any of claims 1 to 3, wherein the central zone has an average temperature at least 300°C higher than that of the near-wall zone; comprising:
introducing a NOₓ-reducing composition comprising an aqueous solution of an active component which is a member selected from the group consisting of ammonia, urea, urea precursors, urea hydrolysis products, carbamates, ammonium salts of organic acids, other amidozine-generating compositions and mixtures of these;
a portion of said composition being introduced into said near-wall zone in droplets of a size of from 5 to 100 µm Sauter mean diameter and at a concentration of from 50 to 98% water, and a portion of the NOₓ-reducing composition is introduced as medium to large diameter aqueous droplets with a size greater than 100 to 1000 µm Sauter mean diameter, and momentum and concentration effective to cause the droplets to pass into and trough the central zone without significantly reacting until the temperature of the effluent in that zone is reduced to a range effective for NOₓ reduction, said concentration of the active NOₓ-reduction composition in the droplets enter and which pass through the central zone at high temperature is selected so that the water in the droplets protects the active component during high-temperature residence in the central zone and is sufficiently evaporated upon entering the lower temperatures downstream to quickly release the active NOₓ-reducing composition within the effective temperature range.

## Patentansprüche

1. Ein Prozeß zur Reduzierung der Stickstoffoxidkonzentration in einem fließenden Strom von Verbrennungsabgängen, die mit mitgerissenen Partikelfeststoffen von einer Ebene Von mindestens 5 glm³ beladen sind, die große Temperaturgradienten transversal zur Richtung des Abgangsflusses bewirken, bestehend aus:
Bestimmung der Temperatur an mehreren Punkten auf einer Ebene transversal zur Flußrichtung der Verbrennungsabgänge;
basierend auf den festgestellten Temperaturen Definition einer Nahwandzone mit einer für die NOx-Reduzierung effizienten Durchschnittstemperatur durch selektive, nicht-katalytische Reduzierung mit einer geeigneten NOx-Reduzierungszusammensetzung und eine Zentralzone mit einer höheren Durchschnittstemperatur als zur NOx-Reduzierung mit dieser Zusammensetzung geeignet, wobei die Durchschnittstemperatur in der Nahwandzone mindestens 200°C niedriger sein muß als die Durchschnittstemperatur in der Zentralzone; und
Einführung der NOx-reduzierenden Zusammensetzung in den Abgang
innerhalb
der Nahwandzone als feine Tropfen einer wässrigen Lösung, wobei die Tropfen eine Größe von 5 bis 100 µm mittlerer Sauter-Durchmesser und eine zur Gewährleistung der Evaporation jeglichen Wassers innerhalb der Nahwandzone geeignete Konzentration aufweisen müssen.

2. Ein Prozeß gemäß Anspruch 1, wobei die Durchschnittstemperatur in der Nahwandzone mindestens 350°C niedriger sein muß als die Durchschnittstemperatur in der Zentralzone.

3. Ein Prozeß gemäß Anspruch 2, wobei der Abgang aus einem mit Kohle oder
einem
anderen Festkraftstoff gefeuerten Verbrennungsofen stammen muß.

4. Ein Prozeß gemäß Anspruch 2, wobei der Abgang mitgerissene Feststoffsorptionsmittel zur SOx-Reduzierung enthält.

5. Ein Prozeß gemäß Anspruch 2, wobei ein Teil der NOx-reduzierenden Zusammensetzung als wässrige Tropfen eingefürt wird, die größer als besagte feine Tropfen sein müssen, mit einer Größe von 100 µm mittlerer Sauter-Durchmesser, und einer Bewegungsenergie und Konzentration, die die Tropfen ohne signifikante Reaktion in und durch die Zentralzone passieren läßt, bis die Temperatur in dieser Zone auf einen für die NOx-Reduzierung effizienten Wert reduziert ist.

6. Ein Prozeß gemäß Anspruch 5, wobei die Einführung feiner und großer Tropfen durch den gleichen Injektor erfolgt.

7. Ein Prozeß gemäß Anspruch 5, wobei mehrere Injektoren zur Einführung feiner
und
großer Tropfen verwendet werden.

8. Ein Prozeß gemäß Anspruch 1, wobei die NOx-reduzierende Zusammensetzung
eine
NH-enthaltende Zusammensetzung umfaßt.

9. Ein Prozeß gemäß Anspruch 8, wobei die NOx-reduzierende Zusammensetzung
eine
wässrige Lösung eines Mitglieds der Gruppe mit Ammoniak, Harnstoff, Harnstoffvorläufer, Harnstoff-Hydrolyseprodukten, Karbamat, Ammoniumkarbonat, Ammoniumbikarbonat, Cyanurat, Ammoniumsalzen organischer Säuren, anderen amidozin-erzeugende Zusammensetzungen und Mischungen dieser Substanzen enthält.

10. Ein Prozeß gemäß Anspruch 9, wobei die NOx-reduzierende Substanz Harnstoff oder zumindest eines seiner Hydrolyseprodukte oder Salze enthält.

11. Ein Prozeß gemäß Anspruch 1 bis 5, wobei die Durchschnittstemperatur der Zentralzone mindestens 300°C höher ist als die der Nahwandzone; und
wobei eine NOx-reduzierende Zusammensetzung wie in Anspruch 9 definiert in den Abgang eingeführt wird und ein Teil als feine Tropfen in die Nahwandzone injiziert wird.

12. Ein Prozeß gemäß einer der Ausprüche 1 bis 3, wobei die
Durchschnittstemperatur
der Zentralzone mindestens 300°C höher ist als die der Nahwandzone, und der folgendes umfaßt:
Einführung einer NOx-reduzierenden Zusammensetzung, die eine wässrige Lösung eines aktiven Bestandteils eines Mitglieds der Gruppe mit Ammoniak, Harnstoff, Harnstoffvorläufer, Harnstoff-Hydrolyseprodukte, Karbamat, Ammoniumkarbonat, Ammoniumbikarbonat, Cyanurat, Ammoniumsalzen organischer Säuren, anderen amidozin-erzeugende Zusammensetzungen und Mischungen dieser Substanzen enthält;
ein Teil dieser Zusammensetzung wird als Tropfen mit einer Größe von 5 bis 100 µm mittlerer Sauter-Durchmesser und einer Konzentration von 50 bis 98% Wasser in die besagte Nahwandzone eingeführt und ein Teil der NOx-reduzierenden Zusammensetzung wird als wässrige Tropfen mittleren bis großen Durchmessers von mehr als 100 bis 1000 µm mittlerer Sauter-Durchmesser und einer Bewegungsenergie und Konzentration , die die Tropfen ohne signifikante Reaktion in und durch die Zentralzone passieren läßt, bis die Temperatur in dieser Zone auf einen für die NOx-Reduzierung effizienten Wert reduziert ist, eingeführt; wobei die besagte Konzentration der aktiven NOx-reduzierenden Zusammensetzung in den Tropfen, die bei hoher Temperatur in die Zentralzone eindringen und passieren, so gewählt wird, daß das Wasser in den Tropfen die aktive Zusammensetzung während des Aufenthalts in der Zentralzone bei hohen Temperaturen schützt und bei Eindringen in die niedrigere Temperatur stromabwärts ausreichend evaporiert ist, um die aktive NOx-reduzierende Zusammensetzung innerhalb des effektiven Temperaturbereichs rasch freizusetzen.

## Revendications

1. Un processus de réduction de la concentration d'oxydes d'azote dans un flux en écoulement d'effluents de combustion chargés de particules solides entraînées à un taux d'au moins 5 glm³ qui causent d'importants gradients de température transversaux par rapport à la direction du flux d'effluents, consistant de :
la détermination de la température en de multiples points situés dans un plan transversal par rapport au flux d'effluents de combustion;
d'après les températures déterminées, la définition d'une zone proche des parois d'une température moyenne efficace pour la réduction des NOₓ par une réduction sélective non catalytique au moyen d'une composition adéquate pour la réduction des NOₓ et d'une zone centrale de température supérieure à la température appropriée pour la réduction des NOₓ au moyen de cette composition, la température moyenne dans la zone proche des parois étant inférieure d'au moins 200 °C à la température moyenne de la zone centrale; et
l'introduction de la composition de réduction des NOₓ dans les effluents à l'intérieur de la zone proche des parois en fines gouttelettes de solution aqueuse, les gouttelettes étant d'un diamètre Sauter moyen de 5 à 100 µm et d'une concentration efficace pour assurer l'évaporation de la quasi totalité de l'eau dans la zone proche des parois.

2. Un processus conforme à la revendication 1 dans lequel la température moyenne dans la zone proche des parois est inférieure d'au moins 350 °C à la température moyenne de la zone centrale.

3. Un processus conforme à la revendication 2 dans lequel les effluents proviennent d'une chambre de combustion à charbon ou autre combustible solide.

4. Un processus conforme à la revendication 2 dans lequel les effluents contiennent des sorbants solides entraînés, introduits pour la réduction des SOₓ.

5. Un processus conforme à la revendication 2 dans lequel la composition de réduction des NOₓ est introduite en gouttelettes aqueuses plus grosses que lesdites fines gouttelettes de solution aqueuse, d'un diamètre Sauter moyen de plus à 100 µm et d'une concentration efficace pour que les gouttelettes passent dans la zone centrale et la traversent sans réaction significative jusqu'à ce que la température des effluents dans cette zone soit ramenée dans une plage efficace pour la réduction des NOₓ.

6. Un processus conforme à la revendication 5 dans lequel l'introduction des fines et des grosses gouttelettes est assurée par le même injecteur.

7. Un processus conforme à la revendication 5 dans lequel l'introduction des fines et des grosses gouttelettes est assurée par plusieurs injecteurs.

8. Un processus conforme à la revendication 1 dans lequel la composition de réduction des NOₓ contient une composition contenant du NH.

9. Un processus conforme à la revendication 8 dans lequel la composition de réduction des NOₓ consiste en une solution aqueuse d'un membre choisi du groupe comprenant l'ammoniaque, l'urée, les précurseurs de l'urée, les produits d'hydrolyse de l'urée, les carbamates, le carbonate d'ammonium, le bicarbonate d'ammonium, les cyanurates, les sels d'ammonium des acides organiques, d'autres compositions produisant de l'amidozine et des mélanges de ces substances.

10. Un processus conforme à la revendication 9 dans lequel l'agent de réduction des NOₓ contient de l'urée ou au moins un des produits d'hydrolyse de l'urée ou un sel durée.

11. Un processus conforme aux revendications 1 à 5 dans lequel la zone centrale a une température moyenne supérieure d'au moins 300 °C à celle de la zone proche des parois; et
dans lequel la composition de réduction des NOₓ définie à la revendication 9 est introduite dans les effluents, en partie par une injection en fines gouttelettes dans la zone proche des parois.

12. Un processus conforme à n'importe laquelle des revendications 1 à 3 dans lequel la zone centrale a une température moyenne supérieure d'au moins 300 °C à celle de la zone proche des parois, consistant en:
l'introduction d'une composition de réduction des NOₓ consistant en une solution aqueuse d'un membre choisi du groupe comprenant l'ammoniaque, l'urée, les précurseurs de l'urée, les produits d'hydrolyse de l'urée, les carbamates, le carbonate d'ammonium, le bicarbonate d'ammonium, les cyanurates, les sels d'ammonium des acides organiques, d'autres compositions produisant de l'amidozine et des mélanges de ces substances;
l'introduction d'une portion de ladite composition dans la zone proche des parois en gouttelettes d'un diamètre Sauter moyen de 5 à 100 µm et à une concentration de 50 à 98 % d'eau, et d'une portion de la composition de réduction des NOₓ en gouttelettes de solution aqueuse de diamètre moyen à grand d'un diamètre Sauter moyen supérieur à 100 à 1000 µm à une vitesse et à une concentration efficaces pour que les gouttelettes entrent dans la zone centrale et la traversent sans réaction significative jusqu'à ce que la température des effluents dans cette zone soit ramenée dans une plage efficace pour la réduction des NOₓ, ladite concentration de la composition active de réduction des NOₓ dans les gouttelettes qui pénètrent dans la zone centrale et la traversent étant sélectionnée de manière à ce que l'eau contenue dans les gouttelettes protège la matière active pendant leur exposition aux hautes températures de la zone centrale et à ce qu'elle soit suffisamment évaporée à son arrivée dans le flux de température inférieure pour relâcher rapidement la composition active de réduction des NOₓ dans la gamme de températures efficace.
